# EUROPEAN PATENT SPECIFICATION

(11) **EP 0 993 618 B1**
(45) Date of publication and mention of the grant of the patent: **09.05.2007**
(21) Application number: 98930662.6
(22) Date of filing: 03.07.1998
(51) Int. Cl.: G01N 35/08

(54) **METHOD AND APPARATUS FOR DETERMINING THE CONTENT OF A COMPONENT IN A FLUID SAMPLE**
VERFAHREN UND GERÄT ZUR BESTIMMUNG DES GEHALTS EINER KOMPONENTE IN EINER FLUIDEN PROBE
PROCEDE ET APPAREIL SERVANT A DETERMINER LA CONCENTRATION D'UN CONSTITUANT DANS UN ECHANTILLON DE FLUIDE

(30) Priority: 04.07.1997 DK 81097
(43) Date of publication of application: 19.04.2000
(73) Proprietor: FOSS Analytical A/S, 3400 Hilleroed (DK)
(72) Inventor: AEGIDIUS, Poul Erik, DK-3210 Vejby (DK)
(74) Representative: Larsen, Anna
(86) International application number: PCT/DK1998/000305
(87) International publication number: WO 1999/001769

(56) References cited:
- EP-A- 0 445 675
- US-A- 4 504 443
- ANALYTICA CHIMICA ACTA, Volume 149, 1983, PETER MARSTORP et al., "Determination of Oxidized Ketone Bodies in Milk by Flow Injection Analysis".

## Description

The present invention relates to a method as described in the preamble of claim 1. The invention further relates to an apparatus as described in the preamble of claim 18 for carrying out the method. Further the invention relates to a diffusion cell and a measurement cell for use in the apparatus. The invention is specifically useful for determination of the content of acetone in milk.

### Prior art

It has for some time been desirable to measure the content of acetone in milk to have a tool for early detection of ketosis (a metabolic disease) in dairy cows. Methods for the determination are in fact available but are generally time-consuming.

A method as mentioned above and more specifically a flow injection method for the determination of acetone in milk is described by Peter Marstorp in Analytica Chimica Acta, 149 (1983) pp. 281-289. Milk samples inclusive possible content of acetone is injected into a carrier stream. The acetone is separated from the milk sample by gas diffusion through a Teflon membrane Any acetone present in the reagent stream on the acceptor side of the membrane can be detected spectrophotometrically or colourimetrically. In the reagent stream acetone CH₃COCH₃ reacts with hydroxylamine NH₂OH forming acetoxime:

(CH₃)₂CO + NH₂OH → (CH₃)₂C-- NOH + H₂O

thus changing the hydroxylammonium-hydroxylamine equilibrium:

NH₃OH+ ↔ NH₂OH + H+

The shift in pH can be monitored by an acid-base indicator, e.g. methyl orange. The unprotonated indicator is yellow and the acid form pink, absorbing light at 520 nm.

Marstorp describes an experimental set-up, including a flow injection analyser, using an injection valve of the rotary valve type having a single channel of variable sample size and a thermostated water bath, in which a modular block system with tube coils and connectors is placed. The gas diffusion module consists of two parts each containing a cavity, 2 mm wide, 80 mm long and 0.2 mm deep. They are separated from each other by a Teflon membrane, 0.07 mm thick. The sample carrier stream is pumped through a first cavity and the reagent stream through the other. A peristaltic pump with eight channels and a through-flow colourimeter or photometer with a 520 nm filter are used. A computer is used for data retrieval and evaluation. All tubes are made of PTFE with an inner diameter of 0.5 mm. A coil of 30 cm is included after the diffusion cell in order to give sufficient time for reaction between acetone and the reagent. The sample size is 100 µl. With a flow rate of 1.3 ml per minute, a time delay of 2.7 seconds is obtained as the approximate reaction time for acetone and hydroxyl ammonium cloride. It is estimated that said method offers the possibility of measuring up to about 100 samples per hour. Experience has indicated that the injection valve will be capable of carrying out about 50,000 samples. Thereafter said valve will be worn out and will need replacement.

The purpose of the present invention is to provide a method as mentioned in the preamble and a component measuring apparatus, and specifically an instrument capable of measuring acetone, which can handle more samples than hitherto known, preferably about 250-500 samples per hour, and an apparatus which is fitted for operation at least eight hours each working day, performing with a high degree of reliability and a low carry-over, and easy to clean.

This is achieved by a method and an apparatus of the kind mentioned in the preamble, which is characterized by the features mentioned in the characterizing portion of claims 1 and 18

The timer-controlled hose clamp valves are easy to clean, easy to control, very durable and very reliable. The excess pressure, i.e. the pressure in the carrier fluids, enables a desired flow rate, being so high that a sample can pass through the whole apparatus during a short period of e.g. 14.4 seconds, corresponding to 250 samples per hour, even including a stay in the diffusion cell of 9.4 seconds to ensure that a high portion of the component to be determined will diffuse through the membrane, and the long stay further being used for the reaction between the reagent and the sought component, to obtain a reliable detection in the downstream measurement cell.

In relation to this it is important that the flow rate applied is high (about 150-160 µl per second in hoses with a diameter of 1 mm) compared to the flow rate of 20 µl per second normally used by FIA.

Firstly the high flow rate contributes to reduce the total apparatus through-flow time of a sample, secondly, the high flow rate enables a continued movement in the sample fluid inside the "chamber" or "channel" of the diffusion cell for some time after the flow has been stopped by closing a controlled hose clamp valve.

The continued fluid movement in the sample fluid on the donor side improves the diffusion of the searched component (e.g. acetone) from the donor side towards the acceptor side. In similar way a continued movement is present in the carrier fluid at the acceptor side, said movement being important for the diffusion rate as well as to the reaction rate of the reaction between the diffusing component and the reagent in the carrier fluid at the acceptor side. Thereby it is possible to avoid the "mixing spirals" or "reactors" normally used in FIA, which unavoidably gives dispersion and therefore a deterioration of the sensitivity of the apparatus. Further advantages by the invention appear from the following description.

### Brief description of the drawings

Figure 1 shows schematically a system for carrying out the invention.
Figure 2A shows an example of an embodiment of a measurement cell in the form of a flow cuvette for a photometer for the detection of the content of acetone.
Figure 2B shows another example of an embodiment of a measurement cell in the form of a flow cuvette for a photometer for the detection of the content of acetone.
Figure 3A shows a flow system diagram of a preferred embodiment of an apparatus according to the invention that is able to handle 250 samples per hour.
Figure 3B shows an alternative flow system diagram of an embodiment of an apparatus according to the invention that is able to handle 250 samples per hour.
Figure 4 shows a flow system diagram of another preferred embodiment of an apparatus according to the invention that is able to handle 500 samples per hour.
Figure 5 shows as an example a function versus time diagram for an acetone meter according to the invention and as shown in Figures 3A, 3B and 4.
Figure 6 shows schematically an example of a time schedule for opening and closing of the valves corresponding to the diagram in Figure 5.
Figure 7 shows as an example an oblique view of a diffusion cell
Figure 8 shows the lower half part of the the diffusion cell in Figure 7.
Figure 9 is a sectional view of the lower half part of the cell in Figure 8 along the line IX-IX and
Figure 10 is a sectional view of the lower cell half part in Figure 8 along the line X-X.
Figure 11 shows a flow system diagram of further embodiment of an apparatus according to the invention that is able to handle 500 samples per hour.

### A detailed description of the invention

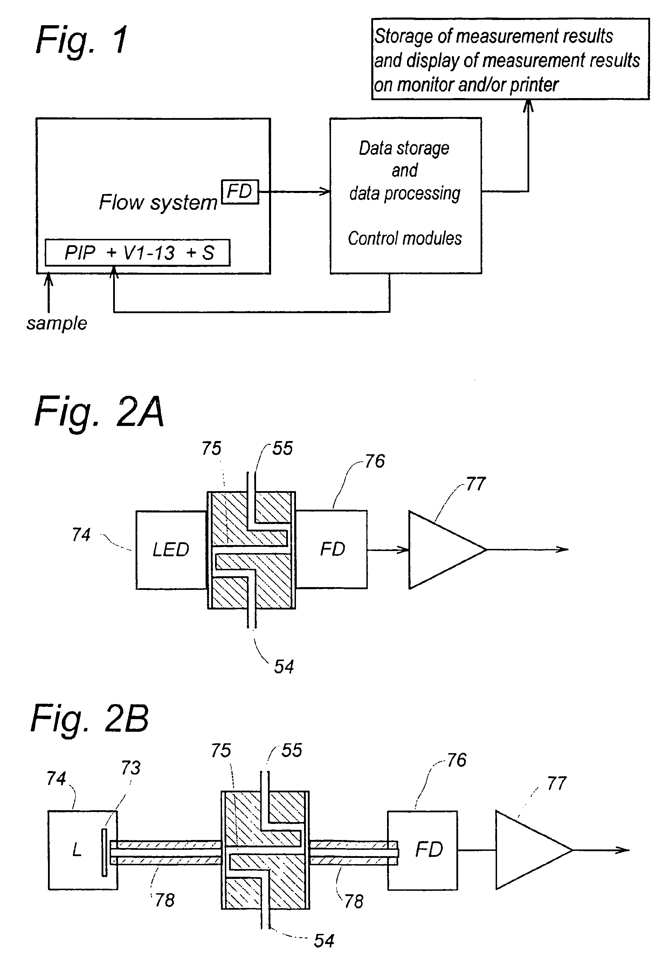

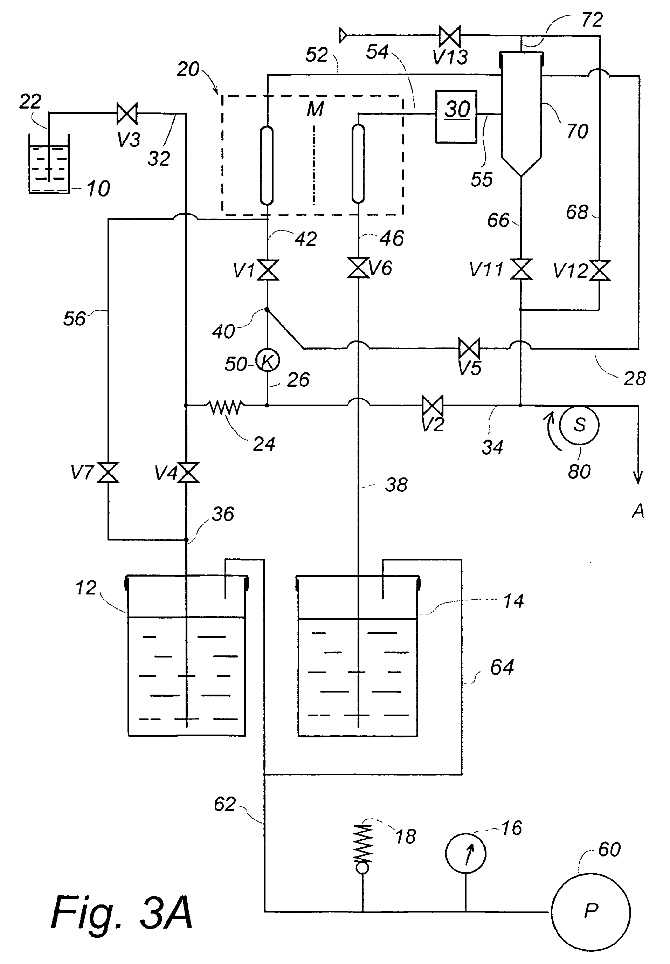

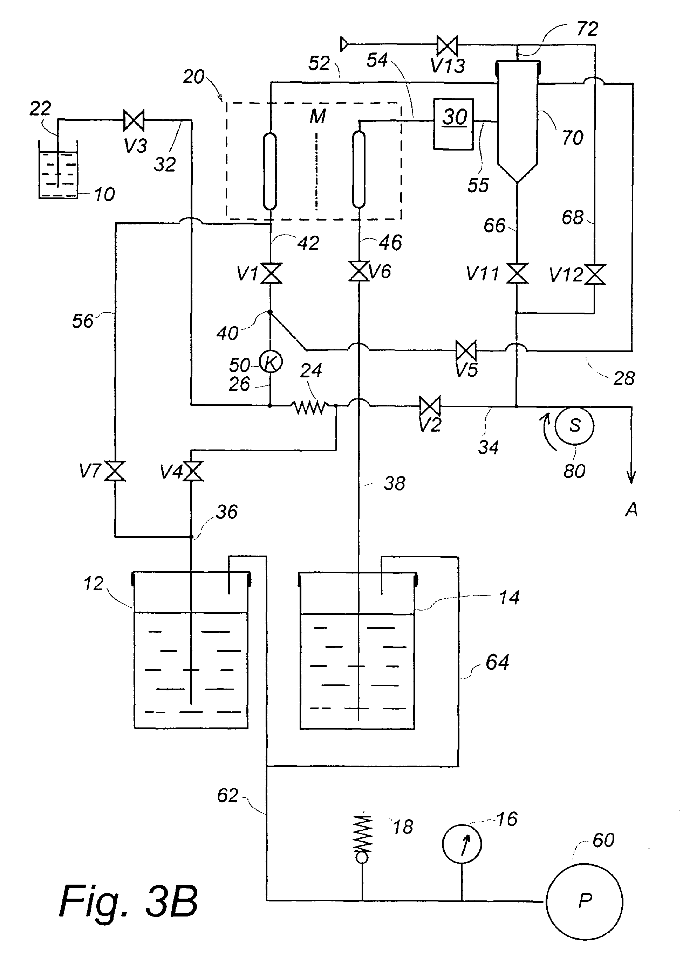

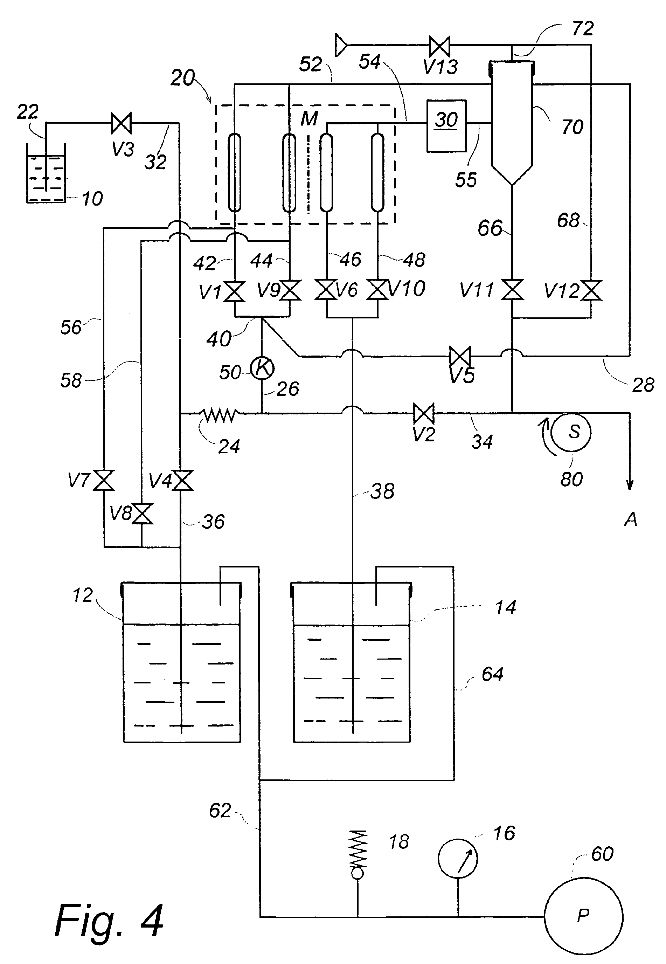

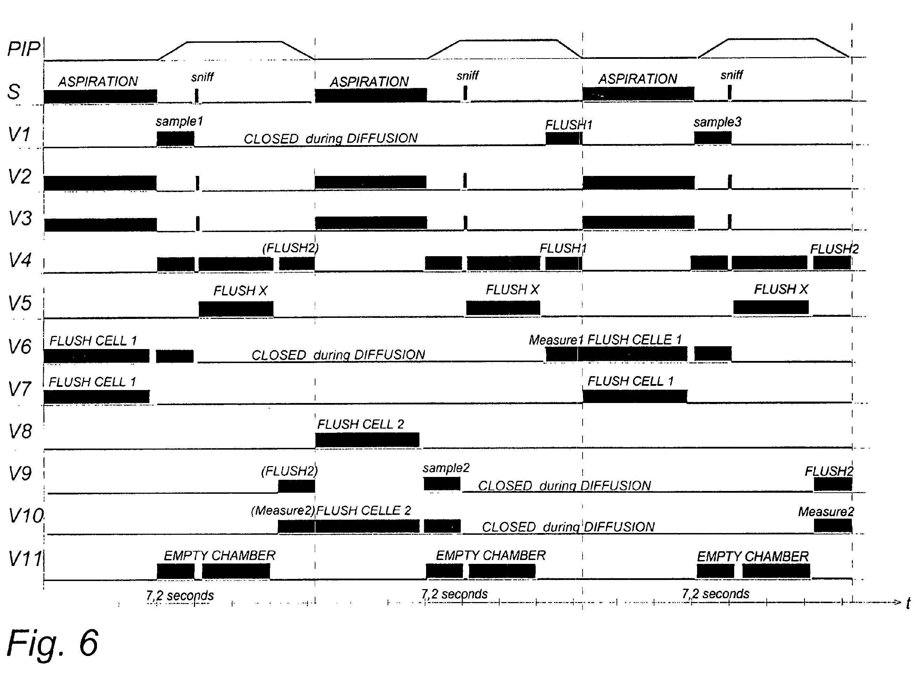

In the following the invention will be further explained through examples of analysing apparatus. Figure 1 shows schematically and as an example an arrangement of a system for an analysing apparatus according to the invention. A sample is aspirated into a flow system, e.g. being arranged as shown in Figure 3A, 3B or 4. The flow system includes carrier liquids and a diffusion cell and operates according to the FIA principle. In the diffusion cell the searched component is separated. On the acceptor side of the diffusion cell the searched component is carried away by a new carrier liquid, also acting as or including a reagent and an indicator, enabling the measuring and recording of the presence and preferably the amount of the searched component by a measurement cell 30. A computer or similar control module provides for data storing and processing of measurement data that in known manner can be stored, displayed and printed what-so-ever may be the wish. In a manner known per se the same computer - or a second similar control module can be arranged to execute the timing of the valves and the peristaltic pump, so that the valves open and close e.g. as indicated in Figure 6. As the implementation of such a control is well known, it will not be explained in further details.

The apparatuses described in the following are provided for analysing milk in respect to a possible content of acetone. Figures 3A, 3B and 4 show schematically and as examples three almost identical arrangements of flow systems for an analysing apparatus for measuring acetone in milk. All corresponding parts have the same reference numbers, and the following explanation refers to all three examples. Figure 3B differs from Figure 3A by showing an alternative arrangement of a measurement string 24. Figure 4 shows a flow system comprising a double diffusion cell 20. The Figure 3B arrangement can also be combined with a double diffusion cell 20 in a way similar to the flow system shown in Figure 4.

10 is a milk sample container. 20 is a diffusion cell with a membrane M. 30 is a measurement cell, and preferably a photometric measurement cell as shown in Figures 2a or 2B, in which the liquid passing through the cell is illuminated by light of wavelength 520 nm. A detector 76 provides an electrical signal indicating any absorbance of the light. After a calibration of the apparatus the content of acetone can be deduced from said electrical signal.

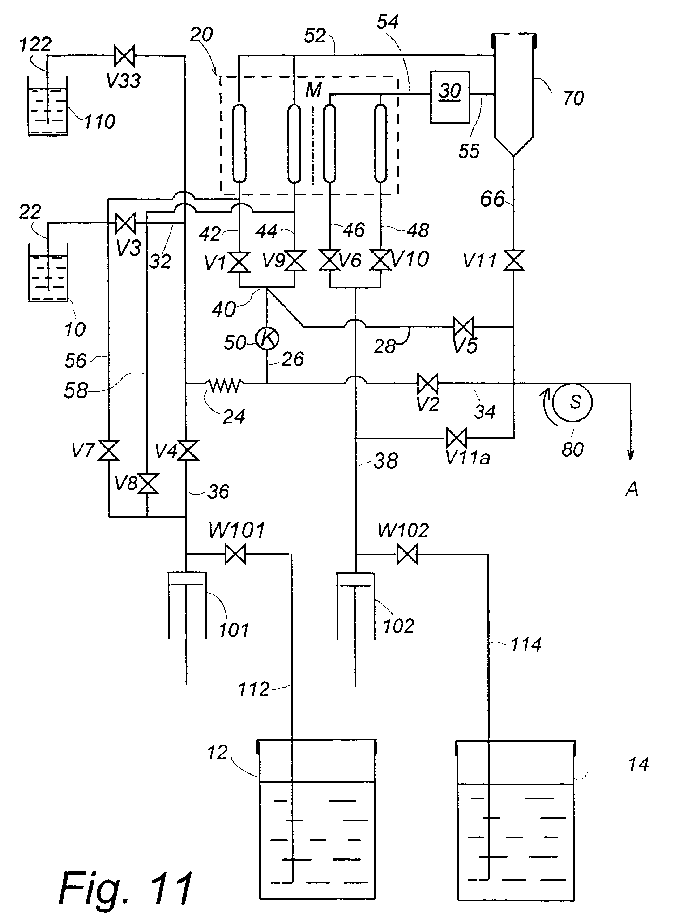

The containers 12 and 14 are shown as closed stock containers for a carrier liquid or buffer liquid, preferably a citrate buffer and a reagent e.g. hydroxyl ammonium chloride + an indicator liquid, both of which are pressurized to 0.25 × 10⁵ Pa (0.25 bar) above atmosphere by an air pump P (60) controlled through a manometer 16 and a pressure regulator 18. In an alternative embodiment one or both of the storage containers might be open to the atmosphere and provided with a pump enabling an excess pressure in a small pressure container connected to a conduit for the carrier liquid and thereby able to provide a desired flow rate in the conduit for the carrier liquid. Preferably a flow rate of about 150-160 µl per second is used. In a presently preferred embodiment shown in Figure 11 syringe pumps 101, 102, connected between at least two hose clamp valves W101 and V4/V8/V7 and W102 and V6/V10/V11a respectively, provides the pressures and the desired flow rates. Further in Figure 11 a second sample intake, (cup 110, pipette 122, and valve V33) is provided, e.g. for aspiration of standard samples for adjusting and/or calibrating the apparatus.

A chamber 70 receives milk from diffusion cell 20 and reagents from measurement cell 30. Further chamber 70 receives rinse liquids through a conduit 28, called "rinse hose a", and these liquids are dispensed therefrom as waste water through conduit 66, also called the waste hose, and a hose pump (peristaltic pump) 80. Conduit means in this description a thin tube or flexible hose, typically with an inner diameter of about 1.0 mm. Preferably, the rinse liquids are the same as the carrier liquids.

In the diagrams shown in Figures 3-4, V1-V13 are valves, and in the preferred embodiment all valves are hose clamp valves, i.e. a valve comprising a hose portion that can be compressed, i.e flattened, and closed by use of a clamp, said hose portion being made of a resilient deformable material ( e.g. gum or plastic such as silicone), and having a good ability quickly to achieve the original form, when the pressure from the clamp stops. This is in contradiction to the conventional FIA, normally using rotary valves for achieving exact sample dosing/dosage.

V1 is an inlet valve in a conduit 42, called "donor hose 1" at the donor side of the diffusion cell 20. V2 is located in the "pump hose", a branch 34 of the sucking side of the hose pump 80. V3 is located in the inlet tube 32, also called the pipette hose, leading from a pipette 22 that can be lowered into the sample container 10. V4 is located in a conduit 36, also called a "carrier liquid conduit", leading carrier liquid from the container 12. V5 is located in "rinse hose a", 28. Milk reminiscenses/rests and rinse liquid are removed/transfered through "rinse hose a" towards the waste chamber 70. V6 is an inlet valve at the acceptor side of the diffusion cell 20, i.e. at the acceptor hose 46 at the end of the second carrier liquid conduit 38. V7 is a rinse liquid inlet valve in the conduit 56, also called "rinse hose b" at the donor side of the diffusion cell 20. (The rinse liquid is in the preferred and shown embodiment the same as the carrier liquid, and also acting as buffer liquid). V11 is a valve in the conduit 66, also called the waste hose, forming the outlet from the chamber 70. V12 is a chamber pressure valve and V13 is a valve in conduit 68, and valve 13 is normally open to the air.

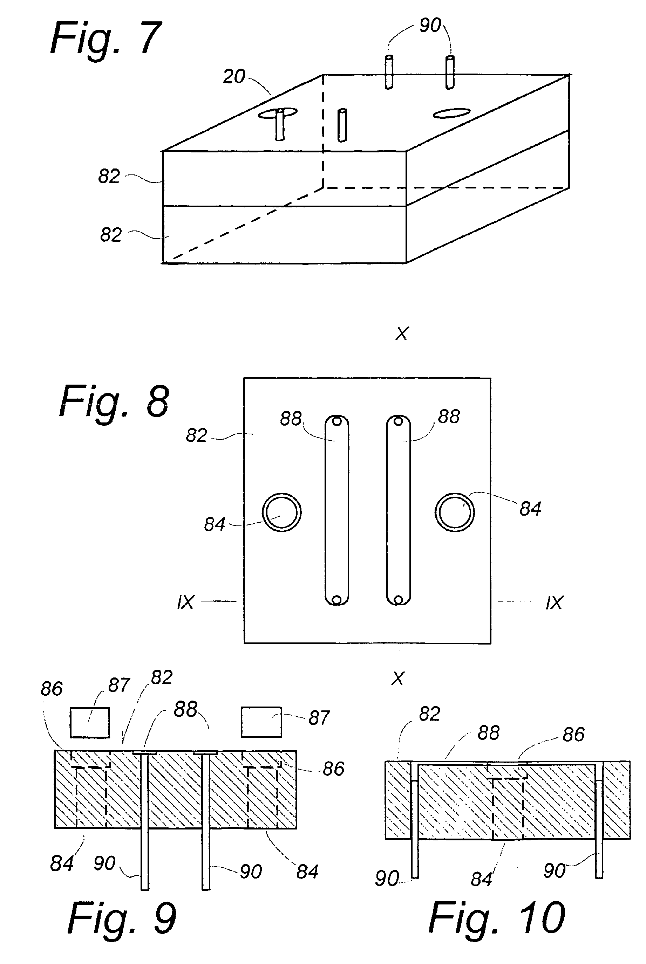

In Figure 4 a double diffusion cell 20 is used, and three extra valves V8, V9 and V10 are introduced. The diffusion cell can be a special diffusion cuvette with two channels 88 on each side of the membrane M, preferably as shown in Figures 7-10, or two separate cells. V8 is a rinse liquid inlet valve in conduit 58, also called "rinse hose c" on the donor side of diffusion cell 20. Valve V8 is used for rinsing the donor side of the membrane in the same way as valve V7. V9 is an inlet valve in a conduit 44, also called "donor hose 2" on the donor side of diffusion cell 20. Valve V9 lets the sample into the second channel 88 of the diffusion cell in the same way as valve V1 lets a sample into the first channel 88. V10 is an inlet valve on the acceptor side of the diffusion cell 20, i.e. at the acceptor hose 48 in the end of the second carrier liquid conduit 38. Valve 10 lets reagent pass into the second channel 88 at the acceptor side of the membrane in the same way as valve V6 into the first channel 88.

Hose pump 80 can aspirate liquid from sample container 10 through pipette 22, valve V3, pipette hose 32, pump hose 34, a measurement string 24 - enclosing a volume of about 30 µl - and valve V2. The outlet from the hose pump is connected to outlet A. Conduit 26, also called "mixing hose" is provided with a number of mixing knots 50 that enable a mixing of the milk sample and the citrate buffer (used as carrier liquid) before the sample is introduced into the diffusion cell 20. The design of the knots 50 is a compromise of sensitivity and the mixing with the buffer. The knots improve the mixing but lengthen the tube whereby the sensivity is deteriorated. Many small knots provide good mixing but also dispersion and loss of sensitivity. The presently preferred embodiment includes a single double knot ("Fisherman's knot") made by a hose having an inner diameter of 1 mm.

Mixer hose 26 connects measure string 24 to the acceptor side of diffusion cell 20 through a T-junction 40 and through donor hose 1, (42) having valve V1, and in Figure 4 through donor hose 2 (44) having valve V9. The milk sample is introduced into the donor side of the diffusion cell through mixer hose 26. The acceptor side is in fluid communication with the measurement cell 30, e.g. a photometer cuvette, through a conduit 54.

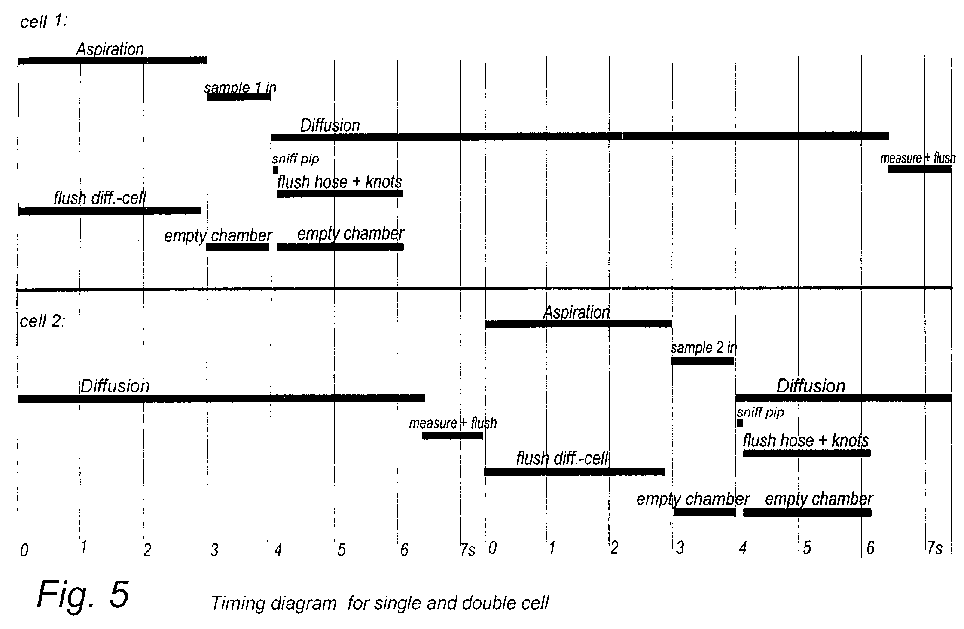

As it appears from Figures 5-6 the preferred transfer time for the 30 µl milk sample through the mixer knots 50 to membrane M is about 1 second. This provides maximum sensitivity under the present conditions. The optimal sample transfer time, i.e. the period of time, in which the valves V4 and V1 are open, depends on the hose length including knots and valve V1, and of the volume of the channels 88 in the diffusion cell. It can easily be found by experiment, changing the time until a maximum of signal pulse is obtained. transfer time for the milk sample

A pressure of (0.25 bars) 0.25 x 10⁵ Pa is applied, providing a flow rate of 150-160 µl per second in the applied tubes that typically are hoses with an inner diameter of about 0.5 to 2 mm, and preferably 1.0 mm.

The lowering of the pipette, the operation of hose pump 80, and the opening and closing of all valves in the flow system are timer-controlled, being controlled by one or a plurality of control modules having a number of timers, e.g. controlled by a computer, such as a personal computer. Further the computer can provide for the data storing and processing of the measurement data from the photometer detector.

### Operation:

The diagram in Figure 5 shows schematically the functioning of the flow system. The upper half shows the functions of an apparatus with a single diffusion cell, "cell 1". In the lower half of Figure 5 the corresponding functions are shown for a possible second cell, "cell 2". Figure 6 shows schematically when the pipette is lowered, when hose pump 80 is operating, and when valves V1-V13 open and close in a preferred embodiment, described in the following.

The pipette PIP is lowered into sample cup 10. V3 and V2 open for three seconds while hose pump 80 is operating. Hereby about 3 ml of the milk sample is aspirated into the flow system - through pipette 22, valve V3, pipette hose 32 and measure string 24, having a volume of 30 µl. The dimension of measure string 24 decides the sample volume (about 30 µl) that will be forwarded to diffusion cell 20. The volume is fairly uncritical, but must be substantially the same from sample to sample. Further - subsequently to the mixing with the carrier liquid / buffer liquid from container 12 - it must be sufficiently large to cover the membrane in diffusion cell 20 . Most of the 3 ml is used to flush out the rest of the previous milk sample, which was left in pipette 22 and pipette hose 32, through pump hose 34 and hose pump 80.

Simultaneously the valves V7 and V6 open for about two seconds, whereby the donor and acceptor side in diffusion cell 20 is rinsed with citrate buffer from container 12 through carrier liquid conduit 36, the "rinse hose b" (56) and the donor outlet hose 52, - and with reagent from container 14 through carrier liquid conduit 38, acceptor hose 1 (46) (and in Figure 4 acceptor hose 2 (48)) acceptor outlet hose 54 and outlet hose 55 to chamber 70, respectively, to remove rest of the previous sample. Both sides of the membrane are rinsed by the same flow rate and same pressure to avoid deflection and thereby avoid mechanical wear of the thin membrane. Hereafter the valves V6 and V7 are closed.

Now V4 and V1 open for one second, whereby citrate buffer from the container 12 is forced through carrier liquid conduit 36 comprising valve V4 so that the milk sample of 30 µl in measure string 24 is forced through mixer knots 50 and the "donor hose 1" (42) comprising valve V1 and enters the donor side of the diffusion cell 20. The acceptor side valve V6 is kept open for the same period of time whereby reagent from the container 14 is forced through the carrier liquid conduit 38 (and in Figure 4 the acceptor hose 46) comprising valve V6 and further on through conduit 54 to measurement cell 30 so that both sides of the membrane M again will be exposed to the same flow rate.

Preferably hose pump 80 runs for a short period of e.g. 100 ms shortly after the introduction of the sample into the diffusion cell - and at the same time as V3 and V2 remain open. Pipette 22 used for aspirating the sample from sample cup 10 is at this stage lifted upwards from the cup. Therefore a brief opening of valves V3 and V2 causes sucking in of a small amount of air into the pipette (sniff-pip). This provides a good separation between the milk samples thereby diminishing the carry-over in the milk string. After the introduction of the milk sample into diffusion cell 20, valve V1 (in donor hose 1, (42)) and valve V6 (in acceptor hose 46 in the end of the carrier liquid conduit 38) are closed, so that the liquids are kept on both sides of membrane M for a predetermined period of time, while the acetone is diffusing through membrane M. This period should be about 5 - 20 seconds and preferably about 10 seconds. In Figure 6 it is shown as 9.4 seconds. In Figure 5 and 6 the "sniff' is shown immediately after the sample has entered the diffusion cell. However the "sniff" may be arranged anywhere in the period in which the pippette has a lifted position.

In the diffusion period - during which the sample is kept in diffusion cell 20, the time can be used for rinsing the 30 µl measure string 24 and mixer hose 26 comprising the mixer knots 50, valve V4 in the carrier liquid conduit 36 and valve V5 in "rinse hose a" (28) being opened for two seconds, whereby citrate buffer by the air pump 60 is forced upward through carrier liquid conduit 36, through measure string 24, mixer hose 26 with mixer knots 50 to a joint 40 and further out through the rinse hose a (28) into waste chamber 70. Then valves V4 and V5 are closed again.

After the diffusion period valves V4, V1 and V6 open for 1 second, then closing again. By this operation citrate buffer is forced upward through the carrier liquid conduit 36, measure string 24, mixer hose 26, joint 40, "donor hose 1" (42), comprising valve V1, donor side of diffusion cell 20 and outwards through donor outlet hose 52 to waste chamber 70. In this way milk rests in valve V1 and the membrane donor side are flushed away by buffer liquid. At the same time air pump 60 forces reagent liquid up through the carrier liquid conduit 38 (and the acceptor hose 46 in Figure 4) having the valve V6 and further on into the acceptor side of the diffusion cell, thereby causing that the portion of reagent liquid which has been left in the diffusion cell during the diffusion period, and which has absorbed the diffused acetone, is pushed toward measure cell 30, e.g. being a photometer, wherein the change of colour in the reagent liquid due to the acetone can be detected as a voltage pulse, e.g. recorded by a computer, and optionally displayed on an oscilloscope (or on the screen of the connected computer.)

The same procedure is repeated for the next milk sample and so on. It appears from the functional diagram in Figure 5-6 that a full measuring cycle takes 14.4 seconds. Then a new sample is aspirated into the system. 14.4 seconds per sample correspond to 250 samples per hour.

It should be appreciated that the time is used optimally for purging the system to reach the high number of 250 samples per hour:
1) Already during the diffusion period, when the liquids dwell in the diffusion cell, the 30 µl measure string and the mixer knots are flushed.
2: Immediately after the diffusion period, and during the passage of the acceptor liquid through the measurement cell, the flushing of the diffusion cell is started by opening valves V1, V4, V6 / V9, V4, V10 (measure + flush)
3: During the aspiration of the sample into the flow system both sides of the membrane are flushed for about 2-3 seconds. (V7, V6).
4. The schedule for the opening and closing of the valves ensures that the same pressure is kept on both sides of the membrane to prevent deflection and thereby wear on the membrane.

Acetone is a big molecule. Therefore, the diffusion through the membrane is a slow process. Further, the reaction between the acetone and the applied reagent, hydroxyl ammonium chloride takes considerable time. In the prior art a mixer coil was inserted between the acceptor side of the diffusion cell and the photometer cuvette to ensure thorough mixing and reaction.

According to the present invention the reaction time is included in the total time in which the liquids remain in the diffusion cell. Any extra (unnecessary) length of hose, such as a mixer coil that would cause dispersion and therefore loss of sensitivity is avoided.

The function of the apparatus having the double diffusion cell is in principle as described for the single cell, but the function of the two cells is in an advantageous manner mutually displaced so that the flow system is applied optimally. As shown in the time diagrams in Figures 5 and 6 the aspiration into cell 2 starts half way in the sample-measuring cycle of cell 1, i.e. 7.2 seconds after the start of the aspiration into the flow system for entering cell 1.

With the arrangement of Figure 4 a new sample can be taken every 7.2 seconds, i.e 500 samples per hour, maintaining a diffusion time of 9.4 seconds. Use of a shorter diffusion time results in a lower sensitivity.

Preferably, the double diffusion cell can be designed as shown in Figure 7, showing an assembled cell 20 and in Figures 8-10 showing a half part 82 of the cell. Preferably, the two halves are substantially of the same form, e.g. kept together by clamps (not shown) and two screws or bolts (not shown) through holes 84, 86. Precise positioning of the two halves may be ensured by two short lengths of tubes 87 arranged in each bore hole 86. Preferably one of the halves 82 are provided with tight fittings to the tube lengths 87 in the bore holes 86, and the other half 82 is provided with lose fittings to the tube lengths 87 in the bore holes 86. In this way the diffusion cell is easy to disassemble and reassemble in order to replace the membrane M.

The fluid channels 88 should have the smallest possible depth to obtain the best possible sensitivity. Preferably a depth of 0.3 mm is used to avoid problems due to air bubbles being caught in the cell. The width of the channels may be 3 mm. The criterion for the choice of dimensions, including the width, is to obtain a big membrane surface, but a small deflection in case of small pressure differences. If the fluid volume becomes too big, the flushing of the diffusion cell becomes more difficult causing carry-over between the samples to increase. Inlet and outlet are provided through thin tubes 90, introduced in bore holes in each end of and preferably perpendicular to the fluid channels 88.

Figures 2A and 2B show two examples of an optical arrangement in which measurement cell 30 is a photometer cell with a light path 75, arranged between a light source 74 and a photodiode, acting as a detector 76 and followed by an electronic amplifier 77. The light source may be a halogen lamp and 73 is a 520 nm optical filter. Preferably, a powerful 520 nm LED is used. Such LED may be mounted directly on measurement cell 30 and eliminates the need for an optical filter.

Acceptor fluid runs through acceptor outlet hose 54 into a channel in measurement cell 30, filling light path 75, proceeding through a channel and into conduit 55 towards waste chamber 70. In the cell the acceptor liquid in light path 75 is illuminated by the 520 nm light. Due to the applied acceptor fluid the presence of acetone will produce a change of colour, implying a measurable increase in the absorption of 520 nm light. Preferably, the path length from diffusion cell 20 through the acceptor outlet hose 54 should be short, and the volume of the measurement cell should be as low as possible to keep the dispersion low. (In this specification "Dispersion" means the unwanted mixing with the carrier fluid, weakening the change of colour, and thereby decreasing the electronic pulse to be registered). A low dispersion is important in respect to the sensitivity of the apparatus regarding acetone. Further the light path shall be long enough to enable the detection of the increased absorption caused by the change of colour of the indicator. Preferably a 6 mm light path of a diameter 1 mm (e.g. corresponding to the optical cables) is used. As shown in the embodiment of Figure 2B light source 74 and/or light path 75 may be connected through optical cables 78. Thereby a distance may be ensured between the fluid filled cuvette 30 and the electronic circuitry related to the detection of the signal pulses being a measure for the presence of acetone. In a presently preferred embodiment the diffusion cell and the measurement cell are arranged substantially adjacent to each other. In an even more advantageous embodiment (not shown) the two cells might be integrated into a single unit combining the light path of the measurement cell with the acceptor channel 88.

### Influence of the ammonia content in the milk:

In the prior art this influence has been ignored. However, the experience of the present inventor indicates that the ammonia content of the milk samples may reach five times the normal content. In such cases it is not acceptable to ignore the ammonia content of the milk. The ammonia diffuses through the membrane causing a negative pulse from the detector and therefore an error in the acetone measurement. In order to minimise the ammonia error it is suggested to mix the sample with a buffer that is able to bind the ammonia, i.e a buffer having a low pH value. In the known apparatus a neutral phosphate buffer is used as carrier on the donor side. According to the present invention an acid buffer is applied, and preferably a citric acid buffer with a pH = about 6.6.

Experiments with the above mentioned buffer and mixer knots 50 with samples containing five times the normal ammonia content in milk showed an error of the acetone measurement of only 0.04 mM, which is one tenth of the lower limit for ketosis (0.4 mM acetone) and this is acceptable. An even lower ammonia influence can be ensured by increasing the concentration of the buffer.

### Advantages obtained by the new method and the apparatus:

The new method and the apparatus are especially advantageous in providing a sample rate of up to 500 samples/h. The application of hose clamp valves instead of the rotary injection valves conventionally used within FIA is essential to the achievement of the high sample rate. The hose clamp valves are very reliable and durable. Further the hose clamp valves are easy to flush, having no "dead" volumes that is difficult to clean thoroughly.

Conventional FIA applies hose pumps and a liquid flow of 1-1.3 ml per minute = 16- 22 µl per second. In the present invention a higher flow rate is desired, i.e. 150-160 µl per second. Hose pumps - also called peristaltic pumps, are not really fitted as the hose wears out and has to be replaced, often requiring a new calibration. In the new flow system hose pumps are therefore replaced by timer-controlled hose clamp valves. The necessary high fluid flow is obtained by establishing an excess pressure, , in conduits and/or containers for the carrier liquids, e.g. in the stock containers. This may for instance happen as shown in Figures 3 and 4 by use of an air pump P and a pressure regulator, suitably adjusted to (0.25 bars) 0.25×10⁵ Pa. By using the combination: Excess pressure on closed containers and timer-controlled hose clamp valves the liquid flow in the plurality of conduits may be controlled according to the wishes. The high flow rate is obtained without noticeable wear on the hoses.
The only hose pump present in the flow system according to the invention is not critical. The pump has to aspirate as much milk into the system that milk string 24 is exchanged completely during the period (e.g. 3 seconds) of the sample aspiration.

According to the invention the diffusion time (the diffusion of acetone through the membrane M) and the reaction time (the reaction of the acetone with the acceptor liquid on the other side of the membrane) together with use of "flow-stop", i.e. that the liquids on both sides of the membrane for a period remain in the diffusion cell, while the acetone diffuses through the membrane. Thereby the sensitivity is increased, but at the same time the measurement time per sample is increased, thereby decreasing the number of samples measured per hour. According to the invention this decrease is compensated by increasing the flow rate by use of the excess pressure in the stock containers. 12, 14. Further, according to the invention a double diffusion cell is used whereby the number of samples per hour are doubled. The increased flow rate may further cause the liquid in the chambers of the cell to continue their movement for part of the diffusion period. This improves the diffusion through the membrane and the reaction between the acetone and the reagent.

In the flow system shown in Figures 3 and 4 hose pumps -also called peristaltic pumps, are as far as possible avoided. Yet a single peristaltic pump 80 is used for aspiration of a milk sample and for discharging waste from chamber 70. For these purposes the peristaltic pump is uncritical as it has no influence upon the accuracy of the dosing of the measurement cell or diffusion cell. Further, peristaltic pump 80 may provide for aeration of the measurement cell (photometer cuvette) and cleaning after use.

The new method and the new apparatus according to the invention are specifically advantageous by having a thorough rinsing system, ensuring a good cleaning of the flow system between the samples to minimise carry-over. The rinse system is simplified by using hose clamp valves instead of slide valves and peristaltic pumps. The hose clamp valve is easy to rinse/clean and is very reliable, contrary to the sliding valves generally applied by FIA that are worn out rapidly. The system operates fast due the very efficient time schedule (Figure 5) and due to high flow rates, which primarily are obtained by establishing excess pressure in the stock containers or in the carrier fluid conduits supplying fluid from the stock containers.

It will be obvious to people in the art that the described emdodiments may be varied in many ways still being with in the scope of the attached claims. In the described examples the flow is stopped during the diffusion period. However it is also contemplated to let the flow continue very slowly through the apparatus. Specifically it shall be emphasised that the invention is not limited to the determination of acetone. Other chemical components may be determined by the claimed method by use of appropriate carrier fluids as buffer liquid and reagent. Neither is it limited to liquids. Gasses can be used as well. Further some of the flow control means, which is shown as hose clamps valves could be embodied by controlled hose pumps.

## Claims

1. A method for determination of the content of a component in a fluid sample by Flow Injection Analysis, by which method a sample is aspirated into a flow system, and a fraction of the sample by flow injection is introduced in a string of a first carrier fluid and sent in on a donor side of a diffusion cell (20) comprising a membrane (M) whereby the component during a diffusion period is separated by diffusion through the membrane (M) towards an acceptor side of the membrane (M), and during a reaction period reacts with a reagent in a second carrier fluid on the acceptor side, and where the second carrier fluid including the reagent and diffused component flows to a measurement cell (30) arranged for the determination of the component content, and where the two sides of the diffusion cell (20) are rinsed by the first and second carrier fluids, respectively,
**characterised by**
- establishing a pressure in communication with the carrier fluid conduits (36, 38) providing flow rates for the first and the second carrier fluids greater than 100 µl per seconds,
- the flow being substantially stopped or slowed down for a predetermined period while the diffusion cell (20) is filled with sample fluid, whereby the reaction between the the reagent and the component to be determined substantially occurs in the diffusion cell (20),
- and the flow being regulated by timer-controlled hose clamp valves.

2. A method according to claim 1, **characterised in that** the flow rates are greater than 100 µl per second and preferably greater than 125 µl per second and most preferably about 150-160 µl per second during the injection of the sample into the donor side of the diffusion cell (20), and later on, during the transfer of the second carrier fluid into the measurement cell (30) on the acceptor side, said flow rates being determined by pressures in closed stock containers (12, 14) for the carrier fluids, and/or said flow rates being determined by a pressure and flow induced by a syringe pump (101, 102).

3. A method according to claim 1 or 2, **characterised in that** during a flushing period the flow rate is greater than 100 µl per second and preferably greater than 125 µl per second and most preferably about 150-160 µl per second, said flow rate being determined by pressures in closed stock containers (12, 14) for the carrier fluids, and/or a pressure and flow induced by a syringe pump (101, 102), whereby the closed stock containers (12, 14) and the syringe pump (101, 102) are identical to those of claim 2, if the claim depends on claim 2.

4. A method according to claim 1, 2 or 3, **characterised in that** the pressure is about 0.1-0.5 x 10⁵ Pa and preferably 0.25 x 10⁵ Pa.

5. A method according to claim 1, **characterised in that** the first and the second carrier fluids are a buffer and a reagent, respectively.

6. A method according to any of the claims 1-5, **characterised in that** the sample is a milk sample.

7. A method according to claim 6, **characterised in that** the component to be determined is acetone.

8. A method according to claim 5 or any of claims 6 or 7 as dependent on claim 5 **characterised in that** the buffer fluid at the donor side is acid, having a pH being lower than 6.8 and preferably a pH of 6.6, for binding any ammonia.

9. A method according to claim 7, **characterised in that** the content of acetone is determined by a photometric measurement, especially a measurement at 520 nm.

10. A method according to claim 1, **characterised by** flushing the measurement cell (30) and both sides of the diffusion cell (20) by said respective carrier fluids at least for a part of the aspiration period during which a new sample is aspirated into the system, preferably for at least 60% and more preferably for at least 90% of the aspiration period.

11. A method according to any of the claims 1-11, **characterised in that** after the aspiration a fraction of the sample is located in a measure string (24).

12. A method according to claim 11, **characterised by** the fraction located in the measure string (24) being forced into the donor side of the diffusion cell (20) through conduits and mixer knots (50) by opening a number of valves comprising a carrier fluid valve (V4) and diffusion cell inlet valves for both the first and the second carrier fluids (V1, V6) for a short period, where after the sample content in the diffusion cell (20) stays there for a predetermined time.

13. A method according to claim 12, **characterised in that** conduits including the measure string (24) and the mixer knots (50) are flushed after the introduction of the sample into the diffusion cell (20) by opening a plurality of valves, comprising the carrier fluid valve (V4) for a predetermined period (FLUSH X) which is coincident with at least part of the diffusion period.

14. A method according to claim 13, **characterised in that** the sample, after the diffusion period, is forced out of the diffusion cell (20) by opening a plurality of valves comprising the carrier fluid valve (V4) and the diffusion cell inlet valves for both the first and the second carrier fluids (V1, V6) again, whereby the conduit (42) comprising the diffusion cell inlet valve for the first carrier fluid (V1) is flushed with the pure carrier fluid located in the measure string (24) and the knot (50), while the fluid on the donor side of the diffusion cell (20) is forced out and the fluid on the acceptor side of the diffusion cell (20) is forced out through the measurement cell (30).

15. A method according to any of the preceding claims, **characterised by** applying a plurality of diffusion cells (20) or a diffusion cell having a plurality of channel sets (88, cell1, cell2) and alternating supply of new samples to the diffusion cells (20) or channel sets (88, cell1, cell2).

16. A method according to any preceding claim, **characterised by** applying a double diffusion cell (20) having two sets of channels (88, cell1, cell2).

17. A method according to claim 15 or 16, **characterised in that** one of the diffusion cells (cell1) and the measurement cell (30) are flushed during a part of the diffusion period of the other diffusion cell (cell2) or the other diffusion cells while a sample is dwelling in the other cell(s) (cell2).

18. Apparatus having a flow system for carrying out the method according to any of the preceding claims and comprising at least one diffusion cell (20) and a measurement cell (30) as well as
1) at least one aspiration pipette (22) arranged to be in fluid communication with the diffusion cell (20) through conduits,
2) a first stock container (12) for containing a first carrier fluid also acting as a buffer and flushing fluid,
3) a second stock container (14) for containing a second carrier fluid also acting as a reagent and flushing fluid
**characterised in that** the apparatus further comprises means for establishing a pressure in communication with conduits (36, 38) for the carrier fluids at a level so as to provide the carrier fluids therein with a flow rate greater than 100 µl per second,
- **in that** the flow system comprises timer-controlled nose clamp valves (V1,V4,V6) for controlling the flow rates of the first and second carrier fluids, respectively, and
- **in that** the hose clamp valves (V1, V4, V6) are arranged so that the flow through the diffusion cell (20) is substantially stopped or slowed down for a predetermined period, preferably from 5 to 20 seconds, and more preferably for about 10 seconds, when the sample has reached the diffusion cell (20).

19. Apparatus according to claim 18, **characterised in that** the stock containers (12, 14) are closed containers able to be pressurised and being connectable to the diffusion cell (20) through controlled hose clamp valves (V4, V1, V6) and/or that syringe pumps (101, 102) and valves (W101 and V4/V8/V7 and W102 and V6/V19/V11a) are arranged to provide pressurised fluid from a reservoir to the carrier liquid conduits.

20. Apparatus according to any of the claims 18-19 **characterised by** the provision of a waste chamber (70) in fluid connection with an outlet of the diffusion cell (20) and with an outlet of the measurement cell (30) and arranged to discharge fluids through conduits connected to a discharge (A).

21. Apparatus according to any of the claims 18-20, **characterised in that** the diffusion cell (20) is provided with at least two channel sets (88) operable to permit the diffusion process to run/take place in a first set of channels (cell1) while the other channel set(s) (cell2) is/are flushed with one or more rinsing fluids.

22. Apparatus according to any of the claims 18-19 **characterised by** a valve control being arranged to flush the measure string (24), mixer hose (26) and mixer knot (50) while the sample is dwelling in the diffusion cell (20).

23. Apparatus according to any of the claims 18-19 **characterised by** the valve control being arranged to flush the membrane during aspiration of the sample.

## Patentansprüche

1. Verfahren zur Bestimmung des Gehalts einer Komponente in einer Fluidprobe durch Fließinjektionsanalyse, wobei durch das Verfahren eine Probe in ein Fließsystem gesaugt wird und ein Bruchteil der Probe durch Fließinjektion in einem Lauf eines ersten Trägerfluids eingeführt wird und auf einer Spenderseite einer Diffusionszelle (20) eingesendet wird, die eine Membran (M) umfasst, wobei die Komponente während eines Diffusionszeitraums durch Diffusion durch die Membran (M) zu einer Akzeptorseite der Membran (M) getrennt wird und während eines Reaktionszeitraums mit einem Reagens in einem zweiten Trägerfluid auf der Akzeptorseite reagiert und wobei das zweite Trägerfluid einschließlich des Reagens und der diffundierten Komponente zu einer Messzelle (30) fließt, die zur Bestimmung des Komponentengehalts angeordnet ist, und wobei die zwei Seiten der Diffusionszelle (20) durch das erste bzw. zweite Trägerfluid gespült werden,
**gekennzeichnet durch**
- Aufbauen eines Drucks in Kommunikation mit den Trägerfluidleitungen (36, 38), wobei Fließgeschwindigkeiten für das erste und zweite Trägerfluid größer als 100 µl pro Sekunde bereitgestellt werden,
- wobei der Fluss für einen vorgegebenen Zeitraum im Wesentlichen angehalten oder verlangsamt wird, während die Diffusionszelle (20) mit Probenfluid gefüllt wird, wodurch die Reaktion zwischen dem Reagens und der zu bestimmenden Komponente im Wesentlichen in der Diffusionszelle (20) auftritt,
- und der Fluss **durch** Zeitgeber-gesteuerte Schlauchklemmventile reguliert wird.

2. Verfahren nach Anspruch 1, **dadurch gekennzeichnet, dass** die Fließgeschwindigkeiten während der Injektion der Probe in die Spenderseite der Diffusionszelle (20) und später während der Übertragung des zweiten Trägerfluids in die Messzelle (30) auf der Akzeptorseite größer als 100 µl pro Sekunde und vorzugsweise größer als 125 µl pro Sekunde sind und idealerweise etwa 150-160 µl pro Sekunde sind, wobei diese Fließgeschwindigkeiten durch Drücke in geschlossenen Vorratsbehältern (12, 14) für die Trägerfluide bestimmt werden und/oder wobei die Fließgeschwindigkeiten durch einen Druck und Fluss bestimmt werden, die von einer Spritzenpumpe (101, 102) induziert werden.

3. Verfahren nach Anspruch 1 oder 2, **dadurch gekennzeichnet, dass** während eines Spülzeitraums die Fließgeschwindigkeit größer als 100 µl pro Sekunde und vorzugsweise größer als 125 µl pro Sekunde und idealerweise etwa 150-160 µl pro Sekunde ist, wobei die Fließgeschwindigkeit durch Drücke in geschlossenen Vorratbehältern (12, 14) für die Trägerfluide bestimmt wird und/oder einen Druck und Fluss bestimmt wird, die von einer Spritzenpumpe (101, 102) induziert werden, wobei die geschlossenen Vorratsbehälter (12, 14) und die Spritzenpumpe (101, 102) identisch mit denen von Anspruch 2 sind, wenn der Anspruch von Anspruch 2 abhängig ist.

4. Verfahren nach Anspruch 1, 2 oder 3, **dadurch gekennzeichnet, dass** der Druck etwa 0,1-0,5 x 10⁵ Pa und vorzugsweise 0,25 x 10⁵ Pa beträgt.

5. Verfahren nach Anspruch 1, **dadurch gekennzeichnet, dass** das erste und zweite Trägerfluid ein Puffer bzw. ein Reagens sind.

6. Verfahren nach einem der Ansprüche 1 - 5, **dadurch gekennzeichnet, dass** die Probe eine Milchprobe ist.

7. Verfahren nach Anspruch 6, **dadurch gekennzeichnet, dass** die zu bestimmende Komponente Azeton ist.

8. Verfahren nach Anspruch 5 oder einem der Ansprüche 6 oder 7 während abhängig von Anspruch 5, **dadurch gekennzeichnet, dass** das Pufferfluid an der Spenderseite Säure ist, die einen pH-Wert niedriger als 6,8 und vorzugsweise einen pH-Wert von 6,6 zum Binden von etwaigem Ammoniak aufweist.

9. Verfahren nach Anspruch 7, **dadurch gekennzeichnet, dass** der Gehalt des Azetons durch eine fotometrische Messung, im Besonderen durch eine Messung bei 520 nm, durchgeführt wird.

10. Verfahren nach Anspruch 1, **gekennzeichnet durch** Spülen der Messzelle (30) und beider Seiten der Diffusionszelle (20) **durch** die jeweiligen Trägerfluide zumindest für einen Teil des Einsaugzeitraums, während dessen eine neue Probe in das System gesaugt wird, vorzugsweise für mindestens 60% und idealerweise für mindestens 90% des Einsaugzeitraums.

11. Verfahren nach einem der Ansprüche 1 - 11, **dadurch gekennzeichnet, dass** sich nach dem Einsaugen ein Bruchteil der Probe in einem Messlauf (24) befindet.

12. Verfahren nach Anspruch 11, **dadurch gekennzeichnet, dass** der Bruchteil, der sich in dem Messlauf (24) befindet, durch Leitungen und Mischknoten (50) in die Spenderseite der Diffusionszelle (20) gedrängt wird, indem eine Anzahl von Ventilen geöffnet wird, umfassend ein Trägerfluidventil (V4) und Diffussionszelleneinlass-Ventile sowohl für das erste als auch für das zweite Trägerfluid (V1, V6), für einen kurzen Zeitraum, wonach der Probengehalt für eine vorgegebene Zeit in der Diffusionszelle (20) verbleibt.

13. Verfahren nach Anspruch 12, **dadurch gekennzeichnet, dass** Leitungen, die den Messlauf (24) und die Mischknoten (50) enthalten, nach dem Einführen der Probe in die Diffusionszelle (20) durch Öffnen mehrerer Ventile, die das Trägerfluidventil (V4) umfassen, für einen vorgegebenen Zeitraum (FLUSH X) gespült werden, der mit mindestens einem Teil des Diffusionszeitraums zusammenfällt.

14. Verfahren nach Anspruch 13, **dadurch gekennzeichnet, dass** die Probe nach dem Diffusionszeitraum durch Öffnen mehrerer Ventile, die wieder das Trägerfluidventil (V4) und die Diffusionszelleneinlass-Ventile sowohl für das erste als auch für das zweite Trägerfluid (V1, V6) umfassen, aus der Diffusionszelle (20) gedrängt wird, wodurch die Leitung (42), die das Diffusionszelleneinlass-Ventil für das erste Trägerfluid (V1) umfasst, mit dem reinen Trägerfluid gespült wird, das sich in dem Messlauf (24) und dem Knoten (50) befindet, während das Fluid auf der Spenderseite der Diffusionszelle (20) heraus gedrängt wird und das Fluid auf der Akzeptorseite der Diffusionszelle (20) durch die Messzelle (30) heraus gedrängt wird.

15. Verfahren nach einem der vorangegangenen Ansprüche, **gekennzeichnet durch** Anwenden mehrerer Diffusionszellen (20) oder einer Diffusionszelle, die mehrere Kanalsätze (88, cell1, cell2) aufweist, und **durch** Abwechseln der Bereitstellung neuer Proben an die Diffusionszellen (20) oder die Kanalsätze (88, cell1, cell2).

16. Verfahren nach einem der vorangegangenen Ansprüche, **gekennzeichnet durch** Anwenden einer Doppeldiffusionszelle (20), die zwei Kanalsätze (88, cell1, cell2) aufweist.

17. Verfahren nach Anspruch 15 oder 16, **dadurch gekennzeichnet, dass** eine der Diffusionszellen (cell1) und die Messzelle (30) während eines Teils des Diffusionszeitraums der anderen Diffusionszelle (cell2) oder der anderen Diffusionszellen gespült werden, während eine Probe in der (den) anderen Zelle(n) (cel12) verweilt.

18. Vorrichtung, die ein Fließsystem zur Ausführung des Verfahrens nach einem der vorangegangenen Ansprüche aufweist und mindestens eine Diffusionszelle (20) und eine Messzelle (30) umfasst ebenso wie
1) mindestens eine Saugpipette (22), die angeordnet ist, durch Leitungen in fluider Kommunikation mit der Diffusionszelle (20) zu sein,
2) einen ersten Vorratsbehälter (12) zur Aufbewahrung eines ersten Trägerfluids, das auch als Puffer- und Spülfluid agiert,
3) einen zweiten Vorratsbehälter (14) zur Aufbewahrung eines zweiten Trägerfluids, das auch als Reagens- und Spülfluid agiert,
**dadurch gekennzeichnet, dass** die Vorrichtung ferner Mittel zum Aufbau eines Drucks in Kommunikation mit Leitungen (36, 38) für die Trägerfluide auf einer Ebene umfasst, um die Trägerfluide darin mit einer Fließgeschwindigkeit größer als 100 µl pro Sekunde bereitzustellen,
- dass das Fließsystem Zeitgeber-gesteuerte Schlauchklemmventile (V1, V4, V6) zur Steuerung der Fließgeschwindigkeiten jeweils des ersten und des zweiten Trägerfluids umfasst und
- dass die Schlauchklemmventile (V1, V4, V6) derart angeordnet sind, dass der Fluss durch die Diffusionszelle (20) für einen vorgegebenen Zeitraum vorzugsweise von 5 bis 20 Sekunden und besonders bevorzugt etwa 10 Sekunden im Wesentlichen angehalten oder verlangsamt wird, wenn die Probe die Diffusionszelle (20) erreicht hat.

19. Vorrichtung nach Anspruch 18, **dadurch gekennzeichnet, dass** die Vorratsbehälter (12, 14) geschlossene Behälter sind, die unter Druck gesetzt werden können und mit der Diffusionszelle (20) durch gesteuerte Schlauchklemmventile (V4, V1, V6) verbunden werden können und/oder dass Spritzenpumpen (101, 102) und Ventile (W101 und V4/V8/V7 und W102 und V6/V19/V11a) angeordnet sind, um Druckfluid von einem Speicher an die Trägerflüssigkeitsleitungen bereitzustellen.

20. Vorrichtung nach einem der Ansprüche 18 - 19, **gekennzeichnet durch** die Bereitstellung einer Abfallkammer (70) in fluider Verbindung mit einem Auslass der Diffusionszelle (20) und einem Auslass der Messzelle (30) und angeordnet, Fluide **durch** Leitungen abzugeben, die mit einem Abfluss (A) verbunden sind.

21. Vorrichtung nach einem der Ansprüche 18 - 20, **dadurch gekennzeichnet, dass** die Diffusionszelle (20) mit mindestens zwei Kanalsätzen (88) bereitgestellt ist, die betreibbar sind, dem Diffusionsprozess das Arbeiten/Stattfinden in einem ersten Satz der Kanäle (cell1) zu ermöglichen, während der andere Kanalsatz/die anderen Kanalsätze (cell2) mit einer oder mehreren Spülfluiden gespült wird/werden.

22. Vorrichtung nach einem der Ansprüche 18 - 19, **gekennzeichnet durch** eine Ventilsteuerung, die angeordnet ist, den Messlauf (24), den Mischschlauch (26) und den Mischknoten (50) zu spülen, während die Probe in der Diffusionszelle (20) verweilt.

23. Vorrichtung nach einem der Ansprüche 18 - 19, **dadurch gekennzeichnet, dass** die Ventilsteuerung angeordnet ist, die Membran während des Einsaugens der Probe zu spülen.

## Revendications

1. Procédé de détermination de la teneur d'un constituant dans un échantillon de fluide par analyse par injection de flux, procédé par lequel un échantillon est aspiré dans un système d'écoulement et une fraction de l'échantillon de fluide par injection de flux est introduite dans un cordon d'un premier fluide porteur et envoyée dans un côté donneur d'une cellule de diffusion (20) comportant une membrane (M), suite à quoi, pendant une période de diffusion, le constituant est séparé par diffusion à travers la membrane (M) vers un côté accepteur de la membrane (M) et, pendant une période de réaction, réagit avec un réactif dans un deuxième fluide porteur du côté accepteur, et où le deuxième fluide porteur comprenant le réactif et le constituant diffusé s'écoule vers une cellule de mesure (30) agencée pour la détermination de la teneur en constituant, et où les deux côtés de la cellule de diffusion (20) sont rincés par les premier et deuxième fluides porteurs, respectivement,
**caractérisé par**
- l'établissement d'une pression en communication avec les conduits de fluides porteurs (36, 38) donnant des débits pour les premier et deuxième fluides porteurs supérieurs à 100 µl par seconde,
- l'arrêt ou le ralentissement sensible de l'écoulement pendant une période prédéterminée tandis que la cellule de diffusion (20) est remplie de fluide échantillon, suite à quoi la réaction entre le réactif et le constituant à déterminer se produit sensiblement dans la cellule de diffusion (20),
- et la régulation de l'écoulement par des vannes à manchon souple commandées par temporisateur.

2. Procédé selon la revendication 1, **caractérisé en ce que** les débits sont supérieurs à 100 µl par seconde, de préférence supérieurs à 125 µl par seconde et idéalement d'environ 150 à 160 µl par seconde pendant l'injection de l'échantillon dans le côté donneur de la cellule de diffusion (20) et, plus tard, pendant le transfert du deuxième fluide porteur dans la cellule de mesure (30) du côté accepteur, lesdits débits étant déterminés par des pressions dans des récipients de stockage fermés (12, 14) pour les fluides porteurs, et/ou lesdits débits étant déterminés par une pression et un débit induits par une pompe à seringue (101, 102).

3. Procédé selon la revendication 1 ou 2, **caractérisé en ce que**, pendant une période de purge, le débit est supérieur à 100 µl par seconde, de préférence supérieur à 125 µl par seconde et idéalement d'environ 150 à 160 µl par seconde, ledit débit étant déterminé par des pressions dans des récipients de stockage fermés (12, 14) pour les fluides porteurs, et/ou par une pression et un débit induits par une pompe à seringue (101, 102), les récipients de stockage fermés (12, 14) et la pompe à seringue (101, 102) étant identiques à ceux de la revendication 2, si la revendication dépend de la revendication 2.

4. Procédé selon la revendication 1, 2 ou 3, **caractérisé en ce que** la pression est d'environ 0,1 à 0,5.10⁵ Pa et de préférence 0,25.10⁵ Pa.

5. Procédé selon la revendication 1, **caractérisé en ce que** les premier et deuxième fluides porteurs sont respectivement un tampon et un réactif.

6. Procédé selon l'une quelconque des revendications 1 à 5, **caractérisé en ce que** l'échantillon est un échantillon de lait.

7. Procédé selon la revendication 6, **caractérisé en ce que** le constituant à déterminer est l'acétone.

8. Procédé selon la revendication 5 ou l'une quelconque des revendications 6 et 7 prises comme dépendantes de la revendication 5, **caractérisé en ce que** le fluide tampon du côté donneur est acide, présentant un pH inférieur à 6,8 et de préférence un pH de 6,6, pour lier tout ammoniac présent.

9. Procédé selon la revendication 7, **caractérisé en ce que** la teneur en acétone est déterminée par une mesure photométrique, en particulier une mesure à 520 nm.

10. Procédé selon la revendication 1, **caractérisé par** la purge de la cellule de mesure (30) et des deux côtés de la cellule de diffusion (20) par lesdits fluides porteurs respectifs au moins pendant une partie de la période d'aspiration pendant laquelle un nouvel échantillon est aspiré dans le système, de préférence pendant au moins 60% et plus préférablement pendant au moins 90% de la période d'aspiration.

11. Procédé selon l'une quelconque des revendications 1 à 11, **caractérisé en ce qu'**après l'aspiration, une fraction de l'échantillon est située dans un cordon de mesure (24).

12. Procédé selon la revendication 11, **caractérisé en ce que** la fraction située dans le cordon de mesure (24) est forcée d'entrer dans le côté donneur de la cellule de diffusion (20) à travers des conduits et des noeuds mélangeurs (50) par l'ouverture d'un certain nombre de vannes comprenant une vanne de fluide porteur (V4) et des vannes d'admission dans la cellule de diffusion pour les premier et deuxième fluides porteurs (V1, V6) pendant une courte période, après quoi le contenu en échantillon de la cellule de diffusion (20) y reste pendant un temps prédéterminé.

13. Procédé selon la revendication 12, **caractérisé en ce que** les conduits comprenant le cordon de mesure (24) et les noeuds mélangeurs (50) sont purgés après l'introduction de l'échantillon dans la cellule de diffusion (20) par l'ouverture d'une pluralité de vannes, comportant la vanne de fluide porteur (V4), pendant une période prédéterminée (FLUSH X) qui coïncide avec au moins une partie de la période de diffusion.

14. Procédé selon la revendication 13, **caractérisé en ce que** l'échantillon, après la période de diffusion, est expulsé de la cellule de diffusion (20) par l'ouverture d'une pluralité de vannes comportant la vanne de fluide porteur (V4) et à nouveau les vannes d'admission dans la cellule de diffusion pour les premier et deuxième fluides porteurs (V1, V6), suite à quoi le conduit (42) comportant la vanne d'admission dans la cellule de diffusion pour le premier fluide porteur (V1) est purgé par le fluide porteur pur situé dans le cordon de mesure (24) et le noeud (50), tandis que le fluide du côté donneur de la cellule de diffusion (20) est expulsé et que le fluide du côté accepteur de la cellule de diffusion (20) est expulsé à travers la cellule de mesure (30).

15. Procédé selon l'une quelconque des revendications précédentes, **caractérisé par** l'application d'une pluralité de cellules de diffusion (20) ou d'une cellule de diffusion dotée d'une pluralité d'ensembles de canaux (88, cell1, cell2) et une alimentation alternée de nouveaux échantillons vers les cellules de diffusion (20) ou les ensembles de canaux (88, cell1, cel12).

16. Procédé selon l'une quelconque des revendications précédentes, **caractérisé par** l'application d'une double cellule de diffusion (20) dotée de deux ensembles de canaux (88, cell1, cell2).

17. Procédé selon la revendication 15 ou 16, **caractérisé en ce que** l'une des cellules de diffusion (cell1) et la cellule de mesure (30) sont purgées pendant une partie de la période de diffusion de l'autre cellule de diffusion (cell2) ou des autres cellules de diffusion tandis qu'un échantillon se trouve dans la ou les autres cellules (cell2).

18. Appareil doté d'un système d'écoulement destiné à mettre en oeuvre le procédé selon l'une quelconque des revendications précédentes et comportant au moins une cellule de diffusion (20) et une cellule de mesure (30) ainsi que
1) au moins une pipette d'aspiration (22) agencée pour être en communication fluidique avec la cellule de diffusion (20) par des conduits,
2) un premier récipient de stockage (12) destiné à contenir un premier fluide porteur agissant également comme tampon et fluide de purge,
3) un deuxième récipient de stockage (14) destiné à contenir un deuxième fluide porteur agissant également comme réactif et fluide de purge,
**caractérisé en ce que** l'appareil comporte en outre des moyens pour établir une pression en communication avec les conduits (36, 38) pour les fluides porteurs à un niveau adapté pour donner aux fluides porteurs qui s'y trouvent un débit supérieur à 100 µl par seconde,
- **en ce que** le système d'écoulement comporte des vannes à manchon souple (V1, V4, V6) commandées par temporisateur régulant les débits des premier et deuxième fluides porteurs, respectivement, et
- **en ce que** les vannes à manchon souple (V1, V4, V6) sont agencées de telle sorte que l'écoulement à travers la cellule de diffusion (20) soit sensiblement arrêté ou ralenti pendant une période prédéterminée, de préférence de 5 à 20 secondes, et plus préférablement pendant environ 10 secondes, lorsque l'échantillon a atteint la cellule de diffusion (20).

19. Appareil selon la revendication 18, **caractérisé en ce que** les récipients de stockage (12, 14) sont des récipients fermés susceptibles d'être pressurisés et d'être reliés à la cellule de diffusion (20) par des vannes à manchon souple (V1, V4, V6) contrôlées et/ou en ce que les pompes à seringue (101, 102) et les vannes (W101 et V4/V8/V7 et W102 et V6/V19/V11a) sont agencées pour fournir du fluide pressurisé provenant d'un réservoir aux conduits de liquides porteurs.

20. Appareil selon l'une quelconque des revendications 18 et 19, **caractérisé par** la mise en place d'un compartiment de rejets (70) en connexion fluidique avec une sortie de la cellule de diffusion (20) et avec une sortie de la cellule de mesure (30) et agencé pour évacuer des fluides par des conduits reliés à une évacuation (A).

21. Appareil selon l'une quelconque des revendications 18 à 20, **caractérisé en ce que** la cellule de diffusion (20) est pourvue d'au moins deux ensembles de canaux (88) pouvant être mis en marche pour permettre au processus de diffusion de fonctionner/d'avoir lieu dans un premier ensemble de canaux (cell1) tandis que l'autre ou les autres ensembles de canaux (cel12) est/sont purgé(s) par un ou plusieurs fluides de rinçage.

22. Appareil selon l'une quelconque des revendications 18 et 19, **caractérisé en ce qu'**une commande de vannes est agencée pour purger le cordon de mesure (24), le tuyau mélangeur (26) et le noeud mélangeur (50) tendis que l'échantillon se trouve dans la cellule de diffusion (20).

23. Appareil selon l'une quelconque des revendications 18 et 19, **caractérisé en ce que** la commande de vannes est agencée pour purger la membrane durant l'aspiration de l'échantillon.
